Europäisches Patentamt

European Patent Office

Office européen des brevets

(19)

(11) Numéro de publication: **0 023 170
B1**

(12) **FASCICULE DE BREVET EUROPEEN**

(45) Date de publication du fascicule du brevet:
01.12.82

(51) Int. Cl.³: **F 16 D 23/12**

(21) Numéro de dépôt: **80401001.5**

(22) Date de dépôt: **02.07.80**

(54) **Dispositif de commande mécanique d'embrayage.**

(30) Priorité: **24.07.79 FR 7919058**

(43) Date de publication de la demande:
**28.01.81 Bulletin 81/4**

(45) Mention de la délivrance du brevet:
**01.12.82 Bulletin 82/48**

(84) Etats contractants désignés:
**DE GB IT**

(56) Documents cités:
**GB-A-192 854
US-A-1 552 368
US-A-3 807 001**

(73) Titulaire: **SOCIETE ANONYME AUTOMOBILES
CITROEN, 117 à 167, Quai André Citroen, F-75747 Paris
Cedex 15 (FR)**
Titulaire: **AUTOMOBILES PEUGEOT, 75, avenue de la
Grande Armée, F-75116 Paris (FR)**

(72) Inventeur: **Schiler, Daniel, 16, Allée des Capucines,
F-78470 St. Remy-lès-Chevreuse (FR)**

(74) Mandataire: **Masseron, Georges, CENTRE TECHNIQUE
CITROEN Chemin Vicinal No 2,
F-78140 Velizy-Villacoublay (FR)**

ACTORUM AG

## Dispositif de commande mécanique d'embrayage

L'invention est relative à un dispositif de commande mécanique d'embrayage, notamment pour véhicules automobiles, et plus particulièrement à une fourchette ou un levier de débrayage.

L'invention s'applique à un embrayage du genre de ceux qui comprennent un disque de friction solidaire d'un arbre mené, monté rotatif dans un carter et de part et d'autre duquel sont disposés des plateaux solidaires en rotation d'un arbre menant et maintenus en contact avec le disque de friction par un organe élastique, tel qu'un diaphragme sensiblement conique. Une butée de débrayage coopère avec ce diaphragme en vue du débrayage sous l'action d'un organe, généralement réalisé sous la forme d'une fourchette ou d'un levier de débrayage. Ce levier peut être réalisé sous la forme d'une pièce en tôle emboutie, montée à une de ses extrémités oscillante sur le carter et reliée à son autre extrémité au moyen d'un transmetteur d'effort, tel qu'une commande Bowden, à un levier ou une pédale actionné par le conducteur, ce levier de débrayage agissant par un point intermédiaire sur la butée de débrayage susdite. Un dispositif de ce genre est connu du US-A-1552 368.

L'invention a pour but une réalisation simple et économique du levier de débrayage sans nécessiter de pièces auxiliaires et un montage facile tout en assurant un guidage et un positionnement positif.

Selon l'invention, un dispositif de commande mécanique d'embrayage du genre défini ci-dessus, est caractérisé en ce que le levier de débrayage est constitué de deux pièces en tôle emboutie, symétriques, soudées par leurs parties planes et présentant chacune une déformation comportant une branche plane parallèle aux parties planes susdites et destinée à coopérer avec un méplat formé sur une portée prolongeant la butée de débrayage, ladite branche plane étant limitée par un bord en forme de came coopérant avec une face de la butée de débrayage, et en ce que sont prévus des moyens de positionnement du levier de débrayage sur la portée de la butée de débrayage.

De préférence, les susdits moyens de positionnement sont constitués par des moyens de clipsage comprenant une empreinte semi-sphérique réalisée dans chacune des branches planes du levier de débrayage et coopérant avec un trou conique effectué dans chacun des méplats de la portée de la butée de débrayage.

Selon un mode préféré de réalisation, l'extrémité du levier de débrayage, montée oscillante dans le carter, présente une forme circulaire coopérant avec un palier emmanché dans une ouverture du carter. Chaque pièce constituant le levier de débrayage présente à l'extrémité, reliée au levier ou à la pédale actionné par le conducteur, une dépression semi-cylindrique de manière à former un logement pour la gaine de la commande Bowden.

L'invention consiste, mises à part les dispositions exposées ci-dessus, en certaines autres dispositions dont il sera plus explicitement question ci-après à propos d'un mode de réalisation particulier décrit avec référence aux dessins ci-annexés, mais qui n'est nullement limitatif.

La figure 1, de ces dessins, est une vue en coupe d'un embrayage conforme à l'invention.

La figure 2 est une vue en coupe suivant II–II de la figure 1.

La figure 3 est une vue en coupe suivant III–III de la figure 1.

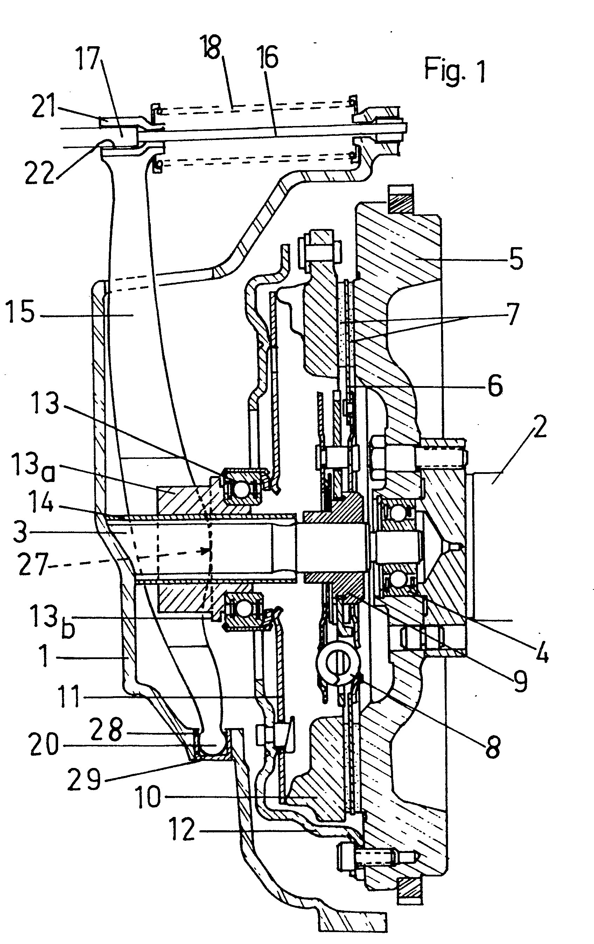

A la figure 1, on voit un embrayage comprenant un carter 1 et propre à accoupler un arbre moteur 2 et un arbre récepteur 3 dont l'extrémité est portée au moyen d'un roulement 4 par l'extrémité de l'arbre moteur 2.

L'embrayage comporte de manière usuelle un volant ou plateau de réaction 5 solidaire de l'arbre moteur 2, un disque de friction 6 de part et d'autre duquel sont disposées des garnitures de friction 7 et qui est relié par l'intermédiaire de ressorts d'amortissement 8 à un moyeu 9 coulissant sur l'arbre récepteur 3 et tournant avec lui, un plateau presseur 10 mobile axialement et solidaire en rotation du plateau de réaction, un diaphragme élastique tendant à déplacer le plateau presseur 10 vers le plateau de réaction 5, de manière à serrer le disque de friction entre les deux plateaux, et étant recouvert par un couvercle 12 fixé au plateau de réaction 5, une butée de débrayage 13 coulissante sur un palier fixe 14 sous l'action d'un levier 15 monté sur une portée 13a prolongeant la butée de débrayage 13, qui coopère avec le diaphragme élastique 11 de manière à permettre l'écartement des deux plateaux 5 et 10. Le levier 15 est relié au levier ou à la pédale actionné par le conducteur, par l'intermédiaire, par exemple, d'une commande Bowden comportant un cable 16 sous une gaine 17 et un ressort de rappel 18.

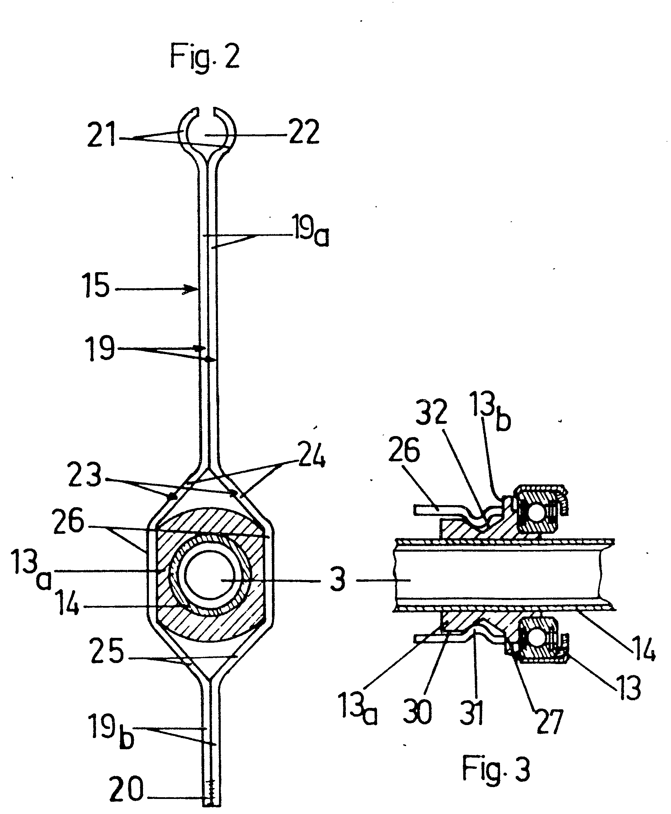

Le levier 15 est composé de deux pièces 19 (figure 2) en tôle emboutie, symétriques et soudées par leurs parties planes 19a et 19b. Chacune de ces pièces présente:

— à son extrémité inférieure, une forme circulaire 20.

— à son extrémité supérieure, une dépression 21 semi-cylindrique, de manière à former un logement 22 pour la gaine 17 de la commande Bowden.

— dans une zone intermédiaire, une déformation 23 composée par deux branches obliques 24 et 25 reliées par une branche plane 26 parallèle aux parties planes 19a et 19b, la branche plane étant limitée par un bord 27 en forme de came.

Le levier 15 est monté oscillant dans le carter par l'intermédiaire de sa forme circulaire 20 qui coopère avec un palier 28 emmanché dans une ouverture 29 du carter, avec une légère possibilité de coulissement lors des débattements angulaires du levier. Les branches planes 26 des déformations 23 coopèrent avec des méplats 30 formés sur la portée 13a de la butée de débrayage 13. Le levier 15 est positionné sur la portée 13a par des moyens de clipsage, constitués par exemple par une empreinte semi-sphérique 31 réalisée dans chaque branche 26 et coopérant avec un dégagement en pointe de forêt 32 formé dans chacun des méplats 30.

Le levier 15 est susceptible d'agir sur la face 13b perpendiculaire à la portée 13a de la butée de débrayage 13 par l'intermédiaire du bord 27 en forme de came des branches planes 26. Il est entraîné par la commande Bowden dont le cable 16 est ancré sur le carter tandis que la gaine 17 prend appui dans le logement 21 du levier 15, le ressort de rappel 18 étant disposé entre le carter 1 et le levier 15.

Le mode de fonctionnement du dispositif de commande selon l'invention est le suivant:

Le dispositif étant dans la position embrayée, comme représentée à la figure 1, lorsque le conducteur actionne le levier ou la pédale d'embrayage, le levier 15 sous l'action de la gaine 17, à l'encontre de l'effort exercé par le ressort 18, pivote dans le palier 28 et agit par l'intermédiaire de son bord 27 en forme de came sur la butée de débrayage, de telle manière que l'action du diaphragme 11 est supprimée et que l'embrayage est en position débrayée. Lorsque le conducteur cesse d'agir sur le levier ou la pédale de débrayage, le levier 15 reprend sa position initiale sous l'action du ressort de rappel 18 et la butée 13 sous l'action du diaphragme élastique 11, l'embrayage étant alors de nouveau en position embrayée.

**Revendications**

1. Dispositif de commande mécanique d'embrayage à disque de friction, notamment pour véhicules automobiles, comportant un levier (15) de débrayage monté à une de ses extrémités oscillant dans le carter (1), relié par son autre extrémité par un trasmetteur d'effort, par exemple une commande Bowden, à la pédale ou au levier actionné par le conducteur, et susceptible d'agir par un point intermédiaire sur une butée de débrayage coopérant avec un organe élastique en vue de décoller des plateaux du disque (6) de part et d'autre duquel ils sont disposés, caractérisé en ce que le levier (15) de débrayage est constitué de deux pièces 19 en tôle emboutie, symétriques, soudées par leurs parties planes 19a–19b et présentant chacune une déformation 23 comportant une branche plane (26), parallèle aux parties planes 19a–19b et destinée à coopérer avec un méplat 30 formé sur une portée (13a) prolongeant la butée (13), de débrayage ladite branche plane étant limitée par un bord (27) en forme de came coopérant avec une face (13b) de la butée de débrayage, et en ce que sont prévus des moyens de positionnement du levier (15) de débrayage sur la portée 13a de la butée de débrayage 13.

2. Dispositif de commande mécanique d'embrayage selon la revendication 1, caractérisé en ce que les moyens de positionnement sont constitués par des moyens de clipsage comprenant une empreinte (31) semi-sphérique réalisée dans chacune des branches planes (26) du levier (15) de débrayage et coopérant avec un trou conique (32) effectué dans chacun des méplats (30) de la portée (13a).

3. Dispositif de commande mécanique d'embrayage selon la revendication 1 ou 2, caractérisé en ce que l'extrémité du levier (15) de débrayage montée oscillante dans le carter présente une forme circulaire (20) coopérant avec un palier (28) emmanché dans une ouverture (29) du carter (1).

4. Dispositif de commande mécanique d'embrayage selon l'une quelconque des revendications précédentes, caractérisé en ce que chacune des pièces (19) constituant de levier (15) de débrayage présente, à l'extrémité reliée à la pédale ou au levier actionné par le conducteur, une dépression (21) semi-cylindrique de manière à former un logement (22) pour la gaine (17 de la commande Bowden.

**Patentansprüche**

1. Mechanische Schaltvorrichtung für Reibscheiben-Kupplungen insbesondere von Kraftfahrzeugen, bestehend aus einem im Gehäuse (1) mit einem Ende schwenkbar gelagerten Ausrückhebel (15), dessen freies Ende über eine Einrichtung, z.B. einen Bowdenzug oder ein Gestänge, mit dem Kupplungspedal verbunden ist und der mit einem mittleren Ansatz auf ein Druckstück (13a) einwirkt, welches mit einem elastischen Organ zusammenarbeitet und die eine Kupplungsplatte gegenüber der anderen ausser Eingriff bringt, dadurch gekennzeichnet, dass der Ausrückhebel (15) aus zwei verformten Blechteilen (19) besteht, die an ihren symmetrischen geraden Abschnitten (19a, 19b) miteinander verschweisst sind, dass jedes Blechteil (19) eine Ausbauchung (23) mit einem geraden, parallel zu den Abschnitten (19a, 19b) verlaufenden Bereich (26) aufweist, die mit einem Flachstück (30) an einem Ansatz (13a) des Druckstückes (13) zusammenwirken und jeweils von einem Randflansch (27) in Form eines mit einer Fläche (13b) des Druckstückes zusammenwirkenden Nockens begrenzt sind, und dass die Mittel zum Verstellen des Ausrückhebels (15) am Ansatz (13a) des Druckstückes angreifen.

2. Schaltvorrichtung nach Anspruch 1, dadurch gekennzeichnet, dass die Mittel zum Verstellen des Druckstückes eine Klemmeinrichtung enthalten, die eine in jeden flachen Bereich (26) der Blechteile (19) eingedrückte halbbogenförmige Rippe (31) und eine dieser zugeordnete konische Kerbe (32) in jeder Fläche (30) des Ansatzes (13a) aufweist.

3. Schaltvorrichtung nach Anspruch 1 oder 2, dadurch gekennzeichnet, dass an dem im Gehäuse (1) gelagerten Ende des Ausrückhebels (15) ein Kugelkopf (20) vorgesehen ist, der in einem in einer Gehäuseausnehmung (29) ausgebildeten Lager (28) aufgenommen ist.

4. Schaltvorrichtung nach einem der anderen Ansprüche, dadurch gekennzeichnet, dass jedes Blechteil (19) an seinem mit der Pedale oder durch ein Gestänge betätigbaren Ende eine halbzylindrische Eindrückung (21) als Sitz (22) für das Anschlussstück (17) des Bowdenzuges aufweist.

## Claims

1. Mechanical control device for a clutch comprising a friction disc, in particular for automobile vehicles, comprising a clutch release lever (15) pivotally mounted in the casing (1) at one of its extremities, connected by its other extremity via a force transmitter, for example a Bowden cable control, to the pedal or lever operated by the driver, and able to act via an intermediate point on a clutch thrust bearing co-operating with a resilient member for the purpose of freeing the plates from the disc (6) on either side of which they are situated, characterised in that the clutch release lever (15) is formed by two members (19) of pressed sheet metal, which are symmetrical, welded together along their plane portions (19a–19b) and each having a deformation (23) comprising a plane section (26) parallel to the plane portions (19a–19b) and intended to co-operate with a flat (30) formed on a bearing surface (13a) extending the clutch thrust bearing (13), the said plane section being delimited by an edge (27) in the form of a cam co-operating with a surface (13b) of the clutch thrust bearing, and in that means are provided for positioning the clutch release lever (15) on the bearing surface (13a) of the clutch thrust bearing (13).

2. Mechanical clutch control device according to claim 1, characterised in that the positioning means are formed by «snap-in» means comprising a hemispherical embossment (31) formed in each of the plane sections (26) of the clutch release lever (15) and co-operating with a tapered hole (32) formed in each of the flats (30) of the bearing surface (13a).

3. Mechanical clutch control device according to claim 1 or 2, characterised in that the extremity of the clutch release lever (15) pivotally mounted in the casing has a circular shape (20) cooperating with a bearing (28) located in an opening (29) of the casing (1).

4. Mechanical clutch control device according to any one of the preceding claims, characterised in that each of the members (19) forming the clutch release lever (15) has a semi-cylindrical depression (21) at the extremity connected to the pedal or lever operated by the driver, in such a manner as to form a seat (22) for the sheath (17) of the Bowden cable control.

PL. 1-2

Fig. 1

Pl·II-2

Fig. 2

Fig. 3